# EUROPEAN PATENT APPLICATION

(11) **EP 3 398 442 A1**
(43) Date of publication of application: **07.11.2018**
(21) Application number: 17169683.4
(22) Date of filing: 05.05.2017
(51) Int. Cl.: A23D 9/007, A23L 27/00, A23L 27/20, A23D 7/005

(54) **USE OF ACETYLENIC FATTY ACID COMPOUNDS AS KOKUMI FLAVOR**

(71) Applicant: Takasago International Corporation, Tokyo 144-8721 (JP)
(72) Inventor: The designation of the inventor has not yet been filed
(74) Representative: Hoffmann Eitle

(57) **Abstract**

The present invention relates to the use of an unsaturated linear C₁₆₋₂₄-monocarboxylic acid having at least one triple bond, or an ester or salt thereof, as a flavor, in particular for conferring kokumi flavor to foodstuffs.

## Description

### Technical Field

The present invention relates to the field of flavoring substances and compositions and, in particular, to substances and compositions for imparting or reinforcing the taste known as "kokumi".

### Technical Background

### Kokumi and umami flavor

Kokumi and umami are now established descriptors in the field of taste and are known to supplement, enhance, or modify the taste and/or flavor of a food without necessarily having a strong characteristic taste or flavor of their own. A desire for kokumi and umami exists for a wide range of foods like soups, sauces, savory snacks, prepared meals, condiments, etc. Moreover, they are often found to complement or enhance foodstuffs which have a savory or salty characteristic and, as a result, may be useful where sodium or salt reduction is desired.

Umami is one of the five basic tastes (the others are sweetness, sourness, bitterness and saltiness), and is sensed by specialized receptor cells present on the human tongue. Umami applies to the sensation of savoriness, and particularly to the detection of glutamates and/or ribotides such as the 5'-monophosphates of adenosine (5'-AMP), inosine (5'-IMP), uridine (5'-UMP), guanosine (5'-GMP) or xanthosine (5'-XMP). These umami compounds are common in meat, cheese and other protein-rich foods, as well as in certain mushrooms and vegetables.

In particular, the addition of monosodium glutamate (MSG) as a flavoring ingredient has become popular and often leads to a "fuller" taste of the foodstuff. However, some consumers apparently are sensitive to MSG and report headaches, nausea or other illnesses upon ingestion of foodstuff flavored with high amounts of MSG.

Kokumi is a term for characterizing taste properties exceeding those describable by the five basic tastes (sweetness, sourness, bitterness, saltiness and umami), and has also been described as "deliciousness", "continuity", "mouthfulness", "mouthfeel" and "thickness". Compounds with kokumi flavor may be essentially tasteless in water, but enhance the taste when present in combination with other flavors. It exists naturally in a variety of foods such as cheese, giving a 'mature' cheese taste; vegetable flavors, particularly tomato meat, where it gives a fullness and longer-lasting taste; mayonnaise and dressings, where it can round out acid notes; fat-reduced food products, where it gives a similar fullness to full-fat products; herbs and spices; and soups, especially miso soup.

In the prior art, various umami- and kokumi-conferring agents have been described.

US 2010/080880 discloses geranylamine derivatives of oxalic acid and the use thereof for providing or enhancing umami taste.

US 2013/0060006 describes kokumi-flavoring compounds, which are obtainable from certain *Allium* species.

US 2015/0296848 is directed to the preparation of a natural kokumi flavor, using a vegetable source and a specific combination of fungal and bacterial fermentation processes.

WO 2014/095564 relates to the use of certain cinnamic acid amide compounds as taste-enhancing agents for imparting or reinforcing umami or kokumi taste.

### Acetylenic fatty acids

Unsaturated fatty acids with triple bonds, also known as acetylenic or alkyinic fatty acids, occur in a number of plants and fungi.

The first known member of this chemical class, crepenynic acid (cis-9-octadecen-12-ynoic acid), has first been isolated as methyl ester from the seed oil of Crepis foetida, a member of the plant family Compositae. The seed oil of Crepis foetida contains up to 60% of this fatty acid (K.I. Mikolajczak et al. Journal of Organic Chemistry, 1964, 318-322).

Crepenynoic acid is also present in amounts of up to 9,5% in the seed oil of Strawflower (Helichrysum bracteatum), beside of several other derivatives of this class, including epoxy acids (mainly coronaric acid), hydroxyl conjugated dienoic acids and a hydroxyl acetylenic acid (7%), named helenylolic acid (Powell, R. G.; Smith, C. R., Jr.; Wolff, I. A., Journal of the American Oil Chemists' Society (1965), 42(3), 165-9).

Another natural source for unsaturated alkynic C18 acids are several leguminous seed oils. Crepenynic acid and (9Z,14Z)-Octadecadien-12-ynoic acid (14,15-dehydrocrepenynic acid, in the following also referred to as "dehydrocrepenynic acid") are present together in amounts up to 30-60% of the total fatty acids in several Afzelia seed oils. Both acetylenic acids have been found in high amounts in seed oils of A. cuanzensis, A. Africana, A. bella, A. bipinensis and also in Pahudia romboidea. (F.D. Gunstone et al., J. Sci. Fd. Agric 1972, 23, 53-60).

Beside their occurrence in seed oils, crepenynic acid and dehydrocrepenynic acid have been found in the lipids of fungi (basidiomycetes). In particular, dehydrocrepenynic acid was found in mushrooms of the Cantharellaceae, Clavulinaceae and Hydnaceae families and was detected as the main fatty acid of lipid in Cantharellus luteocomus (Hiroi, Masaru, Tsuyuki, Hideo, 1992: Identification of dehydrocrepenynic acid in lipid of the Cantharellus luteocomus and its distribution in the Cantharellaceae and allied families, Transactions of the Mycological Society of Japan 33(4): 517-525).

J.D. Bu'Lock et al. were able to demonstrate that Tricholoma grammopodium in culture is able to convert oleic acid first to crepenynic acid and then to dehydrocrepenynic acid. (J.D. Bu'Lock et al., The Origin of Naturally-occurring Acetylenes, J. Chem. Soc.(C), 1967, 332- 336).

Pang, Z and Sterner, O, describe the occurrence of dehydrocrepenyic acid and (10E,14Z)-9-hydroxy-10,14-octadecadien-12-ynoic acid upon damaging the fruit bodies of chanterelles (Journal of Organic Chemistry 56:1233-1235 (1991)).

Hong et al. describe (10E,14Z)-9-hydroxy-10,14-octadecadien-12-ynoic acid and (10E,14Z)-9-oxo-10,14-octadecadien-12-ynoic acid and the effects thereof on the gene expression of peroxisome proliferator-activated receptor-gamma target genes (Bioorganic & Medicinal Chemistry Letters 22: 2347-2349 (2012)).

WO 2012/003545 describes microorganisms and enzymes, which are capable of converting oleic acid or linoleic acid into acetylenic acids.

EP 1 402 787 relates to food products and dietary supplements comprising ximenynic acid (octadeca-trans-11-en-9-ynoic acid, shorthand notation 9a11t-18:2) or alkyl or glycerol esters thereof.

### Summary of the Invention

The present inventors investigated the flavor-contributing compounds in mushroom extracts and surprisingly found that certain acetylenic fatty acids, including dehydrocrepenynic acid and related compounds which can be characterized as derivatives or metabolization products thereof, are highly effective in providing or enhancing kokumi flavor. It was further confirmed that the kokumi effect is also provided by acetylenic fatty acids from other sources while structurally related fatty acid compounds without the triple bond do not achieve this effect.

Accordingly, the present invention relates to the use of an acetylenic linear C₁₆₋₂₄-monocarboxylic acid or an ester or salt thereof for flavoring, e.g., foodstuff or products which are intended for insertion into the oral cavity and removal after use, such as chewing gum or oral care products.

In particular, the compounds of the present invention are useful as a flavor-conferring or taste-modifying agent for foodstuff, specifically for imparting or enhancing kokumi taste.

Another aspect of the present invention is directed the following compounds, which have not been described in the state of the art before:
(9Z,15E)-14,17,18-trihydroxy-9,15-octadecadien-12-ynoic acid;
(9Z,15E)-17(18)-epoxy-14-oxo-9,15-octadecadien-12-ynoic acid methyl ester;
(9Z,15E)-14-oxo-9,15-octadecadien-12-ynoic acid methyl ester; and
(10E,14Z)-9-hydroperoxy-10,14-octadecadien-12-ynoic acid.

Further aspects of the present invention relate to a flavoring composition comprising the compounds, methods for imparting or enhancing kokumi taste of a product such as foodstuff and to products flavored with the compounds and/or the composition.

### Brief Description of the Drawings

FIG. 1 shows a schematic outline of the procedure for obtaining the compounds (1) to (12) by extracting chanterelles.
FIG. 2 shows the taste profile of the methanol/water extract in comparison with the recombinant chanterelle flavor (FIG. 2a) and in comparison with the recombinant chanterelle flavor spiked with the ethyl acetate fraction (FIG. 2b).
FIG. 3 shows the MPLC result of the ethyl acetate fraction of the methanol/water extract (upper panel) and the comparative taste dilution results for the MPLC fractions (lower panel).
FIG. 4 shows the HPLC result for the MPLC fraction M4 and indicates the peaks corresponding to the compounds **(1)** and (2).

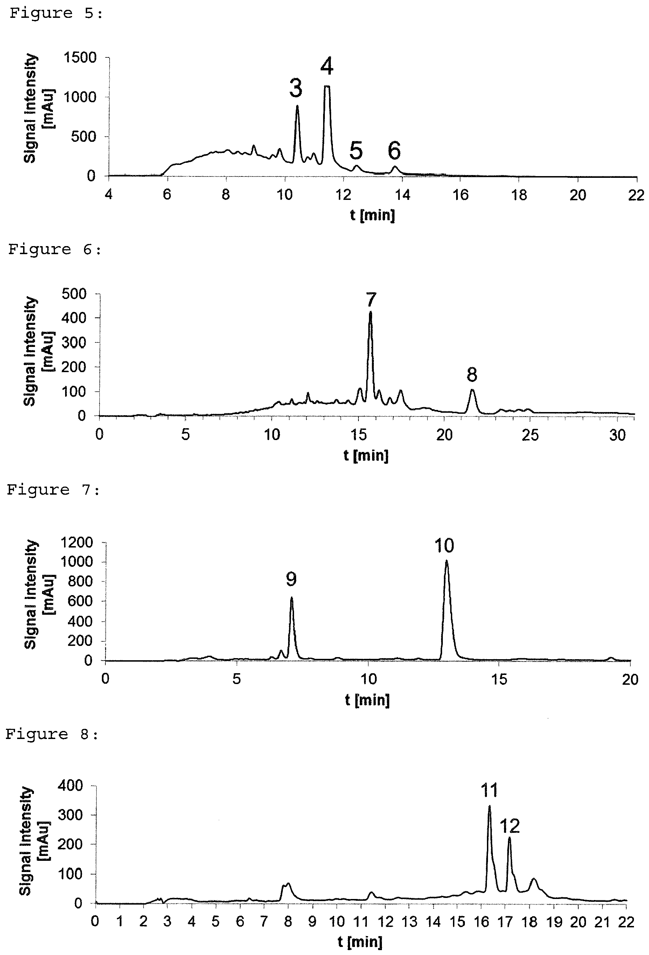

FIG. 5 shows the HPLC result for the MPLC fraction M6 and indicates the peaks corresponding to the compounds **(3), (4), (5)** and **(6).**
FIG. 6 shows the HPLC result for the MPLC fraction M7 and indicates the peaks corresponding to the compounds **(7)** and **(8).**
FIG. 7 shows the HPLC result for the MPLC fraction M8 and indicates the peaks corresponding to the compounds **(9)** and **(10).**
FIG. 8 shows the HPLC result for the MPLC fraction M10 and indicates the peaks corresponding to the compounds **(11)** and **(12).**

### Detailed Description

### Flavor-active compounds

The present invention uses acetylenic linear C₁₆₋₂₄-monocarboxylic acids or an ester or salt thereof (in the following also abbreviated as acetylenic fatty acid compounds) as a flavor-active compound. These compounds are typically derived from unsaturated fatty acids such as oleic acid or linoleic acid via dehydrogenation of a double bond by the enzyme acetylenase, forming a triple bond. Optionally, the compounds may include one or more further double bonds in addition to the triple bond, and/or may have been subjected to further modifications such as peroxidation or hydroxylation reactions.

In a preferred embodiment, the acid is a C₁₈-acid having a triple bond at position 9 or 12. Preferably, the acid also has at least one further double bond. Typical examples include the above-mentioned crepenynic acid (shorthand notation 9c12a-18:2; 9c stands for 9-cis and 12a stands for 12-yn), dehydrocrepenynic acid (9c12a14c-18:3) and ximenynic acid (9a11t-18:2).

The acids may be used in their free acid form, or as salts or esters. Examples of the salts include ammonia salts, alkali metal salts such as sodium or potassium salts and alkaline earth metal salts such as magnesium or calcium salts. Examples of the esters include C₁₋₄-alkyl esters, preferably methyl or ethyl esters.

The carbon chain of the acids may also have one or more oxygen-containing substituents such as hydroxy (-OH), oxo (=O), hydroperoxy (-OOH) or an epoxy group. Such substituents may either be introduced by metabolization, or can be formed, e.g., by oxidation in the atmosphere. Surprisingly, it was found that as long as the triple bond remains intact, the oxidation products will likewise achieve the kokumi effect in accordance with the invention.

According to a particularly preferred embodiment, the acids are represented by the following Formula (I):

ROOC-(CH₂)₇- (A)-C≡C- (B) (I)

wherein R is hydrogen, a C₁₋₄ alkyl group or a cation forming a salt with the ⁻OOC-moiety, such as an alkali and alkaline earth metal cation. Preferably, R is hydrogen, methyl or ethyl, more preferable hydrogen or methyl.
(A) represents a divalent C₃-segment, which constitutes the carbon atoms 9 to 11 of the chain and may have at least one of a double bond and an oxygen-containing substituent. The double bond may be in *cis* (Z) or *trans* (E) configuration, specific examples include 9-Z or 10-E. Examples for the oxygen-containing substituent include a hydroxyl group, a hydroperoxy group, an oxo group or an epoxide structure. (A) may also include the double bond and the oxygen-containing substituent in combination, and multiple oxygen-containing substituents may be present, which could be the same or different. Specific examples for the group (A) include the following formulae (A-1) and (A-2): 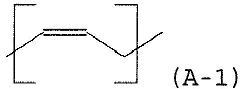 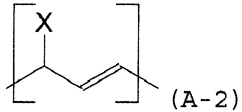 In these formulae, X represents -OH, =O or -OOH.
(B) represents a monovalent C₅-segment, which constitutes the carbon atoms 14-18, and which may have at least one of a double bond and oxygen-containing substituent. The double bond may be in *cis* (Z) or *trans* (E) configuration, specific examples include 14-Z or 15-E. The oxygen-containing substituents may be the same as described for (A). Furthermore, (B) may also include a double bond and an oxygen-containing substituent in combination, and multiple oxygen-containing substituents may be present, which could be the same or different. Specific Examples for the group (B) include the following formulae (B-1) to (B-4): 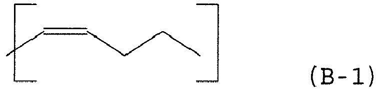 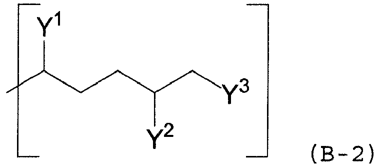 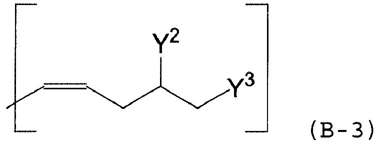 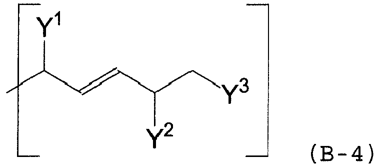 In the formulae (B-1) to (B-4), Y¹ represents -OH, =O or-OOH, and Y² and Y³ may be the same or different and represent -OH or =O or Y² and Y³ together may form an epoxy group.

Examples for the compound of Formula (I) include 14,15-dehydrocrepenyic acid, esters thereof and oxidation products thereof, as represented by the following formulae: 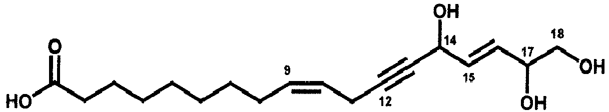
**(1)** (9Z,15E)-14,17,18-trihydroxy-9,15-octadecadien-12-ynoic acid 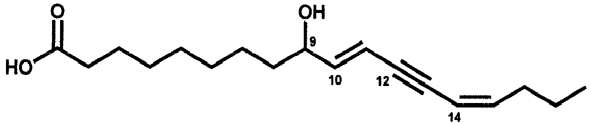
**(3)** (10E,14Z)-9-hydroxy-10,14-octadecadien-12-ynoic acid 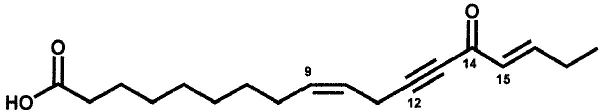
**(4)** (9Z,15E)-14-oxo-9,15-octadecadien-12-ynoic acid 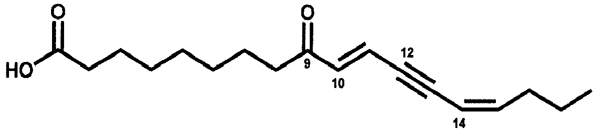
**(5)** (10E,14Z)-9-oxo-10,14-octadecadien-12-ynoic acid 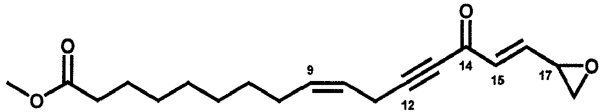
**(6)** (9Z,15E)-17(18)-epoxy-14-oxo-9,15-octadecadien-12-ynoic acid methyl ester 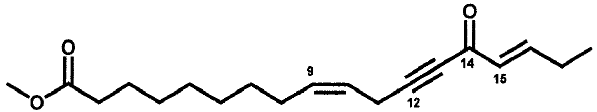
**(8)** (9Z,15E)-14-oxo-9,15-octadecadien-12-ynoic acid methyl ester 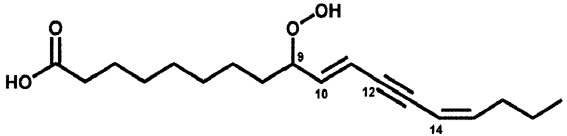
**(9)** (10E,14Z)-9-hydroperoxy-10,14-octadecadien-12-ynoic acid 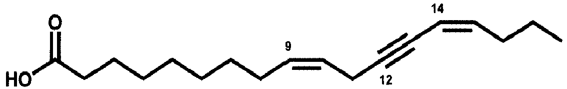
**(10)** 14,15-dehydrocrepenyic acid 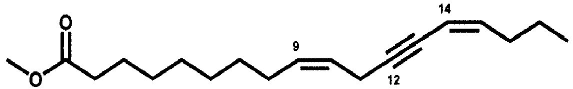
**(11)** 14,15-dehydocrepenyic acid methyl ester 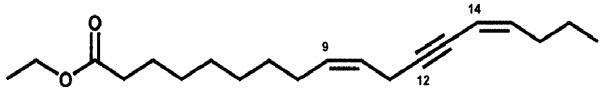
**(12)** 14,15-dehydrocrepenyic acid ethyl ester

These compounds have been isolated from chanterelles and were shown to exhibit a particularly strong kokumi-enhancing effect with a very low threshold value. It is assumed that the biosynthesis of the compounds firstly involves the formation of 14,15-dehydrocrepenyic acid (10), followed by further metabolization in order to yield the other compounds.

In water, the compounds of the present invention are generally almost tasteless at low concentrations and may exhibit a bitter or astringent taste once the concentration increases. When combined with foodstuffs or other flavors, specifically with flavors having an umami component, the compounds of the invention provide a remarkable kokumi effect, increasing the feel of mouthfulness and volume.

For reference, the following compounds **(2)** and **(7)** have been isolated from chanterelles as well, and may be regarded as metabolization products in which the triple bond has been degraded. It was found that these compounds do not exhibit a kokumi flavor. This confirms that the triple bond is of relevance for the flavoring effect. 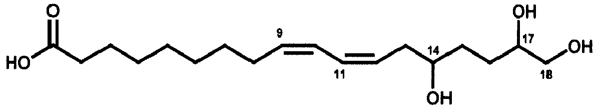
**(2)** (9Z,11Z)-14,17,18-trihydroxy-9,11-octadecadienoic acid 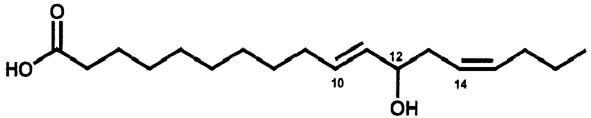
**(7)** (10E,14Z)-12-hydroxy-10,14-octadecadienoic acid

Among the above-listed compounds of formulae **(1)** to **(12),** the compounds **(3), (5)** and **(10)** to **(12)** already have been identified in the scientific literature. In this respect, reference is made to the articles of Pang and Sterner (1991) and Hong et al. (2012), as cited above. The flavor-active properties and taste-modifying effects, however, were not investigated. Compounds **(1), (2), (4)** and **(6)** to **(9)** have not been described in the literature before.

### Preparation

Acetylenic fatty acids for use in accordance with the present invention are readily available from natural sources.

The inventors have discovered the compounds for use in the present invention in extracts of chanterelle mushrooms. The specific extraction and isolation procedure is explained in the Examples below, and provides one way for obtaining the compounds.

As discussed above, dehydrocrepenynic acid **(10)** is also found in various Afzelia seed oils, in particular of A. cuanzensis, A. Africana, A. bella and A. bipinensis and also in Pahudia romboidea. An alternative route for providing the compounds of the invention therefore involves the hydrolysis of these seed oils, followed by further chemical and/or enzymatic modification of the thus-formed dehydrocrepenynic acid by oxidation, hydroxylation or other modifications as desired. For instance, allowing oxidation of dehydrocrepenynic acid **(10)** by air leads to the formation of (10E,14Z)-9-oxo-10,14-octadecadien-12-ynoic acid **(5).**

Apart from *Cantharellus cibarius,* several other mushrooms of the genera Cantharellaceae, Clavulinaceae and Hydnaceae comprise dehydrocrepenynic acid and related fatty acids, either as lipids or in the free acid form. These mushrooms likewise represent a suitable source for providing the compounds of the present invention.

Finally, it is also conceived to prepare the compounds by enzymatic fermentation of unsaturated C₁₈-fatty acids such as oleic acid or linoleic acid, followed by oxidation, hydroxylation or further modifications as required. The required enzymes Δ12-acetylenase and Δ14-conjugase and, in given case, Δ12-dehydrogenase, as well as microorganisms comprising the same, are described in the literature.

For instance, WO 97/37033 describes the provision of Δ12-acetylenase and the preparation of recombinant cells comprising the same. WO 2012/003545 discloses recombinant cells comprising both Δ12-acetylenase and Δ14-conjugase enzymes. Optionally, Δ12-dehydrogenase activity may be provided as well. The technology described in these documents can be adapted for providing dehydrocrepenynic acid for use in the present invention.

The above-described consideration for dehydrocrepenynic acid applies to other acetylenic fatty acids in an analogous manner. For instance, ximenynic acid (9a11t-18:2) occurs in various seed oils, in particular the oils of the fruit kernels of Ximenia Americana or Ximenia Africana and of various sandalwood species such as Santalum obtusifolium, Santalum spicatum and Santalum acuminatum. Ways for isolating ximenyic acid from natural sources are described, e.g., in EP 1 402 787, and are also applicable for the purposes of the present invention.

In view of availability and productivity, the acetylenic acids of the present invention are preferably obtained from natural sources, e.g., as triglyceride oils, and subsequently isolated by ester hydrolysis or transesterification.

### Flavoring composition

### (General)

A further aspect of the invention concerns a flavoring composition. The flavoring composition includes at least one of the acetylenic fatty acid compounds, in combination with an acceptable carrier, and may be formulated in a solid, semi-solid (e.g., gel- or paste-like) or liquid form, wherein solid formulations are preferable. Further to the acetylenic fatty acid compounds and the carrier, the composition may optionally include additional flavor-active ingredients and auxiliary ingredients as desired.

### (Flavor-active Ingredients)

The flavor-active components of the composition include the acetylenic fatty acid compounds and optional further flavor-active ingredients, as described below in detail.

The total content of the acetylenic fatty acid compounds is not particularly limited, as long as the amount is effective for providing a flavoring effect. Preferably, the amount is in the range of 0.0001 to 10 wt.%, more preferably 0.001 to 5 wt.%, yet more preferably 0.005 to 1 wt.% and even more preferably 0.01 to 0.1 wt.%, based on the total weight of the composition.

The additional flavor-active ingredients may include flavorimparting or flavor-enhancing ingredients, preferably umamiimparting ingredients such as MSG or mononucleotides, flavormasking ingredients, as well as volatile flavoring agents capable of conferring, modifying or masking the fragrance.

When used in combination with MSG, the acetylenic fatty acid compounds can be used to confer or enhance the kokumi flavor, therefore allowing to provide a savory taste using lower MSG contents as compared to conventional formulations. In such formulations, the content of MSG is preferably 0.0001 to 10 wt.%, more preferably 0.001 to 5 wt.%, yet more preferably 0.005 to 1 wt.% and even more preferably 0.01 to 0.1 wt.%, and the ratio of the acetylenic fatty acid compounds to MSG preferably is in the range of 1:1 to 1:200.

Further to MSG, mononucleotides can likewise be used as an umami flavor for use in combination with the compounds of the invention. Examples for the mononucleotides include the 5'-monophosphates of adenosine (5'-AMP), inosine (5'-IMP), uridine (5'-UMP), guanosine (5'-GMP), cytosine (5'-CMP) or xanthosine (5'-XMP), as well as pharmaceutically acceptable salts thereof.

Further examples for the taste-active ingredients, which could be used in the compositions of the present invention, include lactisole, hydroxyflavanones, mixtures of whey proteins with lecithins, yeast extracts, plant hydrolyzates, powdered vegetables (e.g. onion powder, tomato powder), plant extracts (e.g. lovage), marine algae and mixtures of mineral salt.

Still further examples include 2,4-dihydroxybenzoic acid; 3-hydroxybenzoic acid; sodium salts, preferably sodium chloride, sodium lactate, sodium citrate, sodium acetate, sodium gluconoate; hydroxybenzoic amides, such as 2,4-dihydroxybenzoic acid-N-(4-hydroxy-3-methoxybenzyl)amide, 2,4,6-trihydroxybenzoic acid-N-(4-hydroxy-3-methoxybenzyl) amide, 2-hydroxybenzoic acid-N-4-(hydroxy-3-methoxybenzyl)amide, 4-hydroxybenzoic acid-N-(4-hydroxy-3-methoxybenzyl)amide, 2,4-dihydroxy benzoic acid-N-(4-hydroxy-3-methoxybenzyl)amide-monosodium salt, 2,4-dihydroxybenzoic acid-N-2-(4-hydroxy-3-methoxyphenyl)-ethyl-amide, 2,4-dihydroxybenzoic acid-N-(4-hydroxy-3-ethoxybenzyl)amide, 2,4-dihydroxybenzoic acid-N-(3,4-dihydroxybenzyl)amide and 2-hydroxy-5-methoxy-N-[2-(4-hydroxy-3-methoxyphenyl)ethyl]amide; 4-hydroxybenzoic acid-vanillyl-amide; hydroxydeoxybenzoins, such as 2-(4-hydroxy-3-methoxy-phenyl)-1-(2,4,6-trihydroxyphenypethanone, 1-(2,4-dihydroxyphenyl)-2-(4-hydroxy-3-methoxy-phenyl)ethanone, 1-(2-hydroxy-4-methoxy phenyl)-2-(4-hydroxy-3-methoxyphenyl)ethanone; hydroxyphenyl alkane diones, such as gingerdion-[2], gingerdion-[3], gingerdion-[4], dehydrogingerdion-[2], dehydrogingerdion-[3], dehydrogingerdion-[4]); diacetyl trimers; γ-aminobutyric acids and divanillins; bicyclo[4.1.0]heptane-7-carboxylic acid amides; and cyclopropanecarboxylic acid(3-methylcyclohexyl)amides.

The compositions, preparations and/or semi-finished goods according to the invention preferably also contain one or more sweet enhancing substances and one or more further flavorings which cause a trigeminal stimulus (tingling, prickling, hot, cooling, etc.) In this way, an enhancement and deepening as well as a rounding off of the taste profile, in particular the spicy and/or salty taste of the composition, can be achieved.

The flavoring composition also may include volatile flavoring substances. The volatile flavoring substance is herein preferably a sensorially effective component with a vapor pressure of greater than or equal to 0.01 Pa at 25° C, preferably a vapor pressure of greater than or equal to 0.025 Pa at 25° C. A large part of the volatile flavoring substances have a vapor pressure of greater than or equal to 1 Pa at 25° C. These flavoring substances are considered as preferred for use in the compositions according to the invention.

Suitable flavoring substances, which can be the ingredient of such a flavoring composition, are well known in the state of the art and can be found in, for example, H. Surburg and J. Panten, Common Fragrance and Flavor Materials, 5th. Ed. Wiley-VCH, Weinheim 2006. Respective examples include organic acids (saturated and unsaturated) such as butyric acid, acetic acid, methylbutyric acid, capronic acid; alcohols (saturated and unsaturated) such as ethanol, propylene glycol, octenol, cis-3-hexenol, benzyl alcohol; sulfides and disulfides such as dimethyl sulfide, difurfuryl disulfide, methylthiopropanal, thiols such as methylfuranthiol; pyrazines and pyrrolines such as methylpyrazine, acetylpyrazine, 2-propionylpyrroline, 2-acetylpyrroline.

### (Additives)

In addition to the one or more acetylenic fatty acid compounds, the optional further flavor-active ingredient(s) and the carrier, the composition may also include auxiliary ingredients, as desired. Examples for these auxiliary ingredients include conventional food additives such as emulsifiers, formulation aids, dispersants, flocculants, lubricants, binders, antioxidants or substances enhancing the antioxidative effect, preservative agents, enzymes or colorants.

In view of the sensitivity of the acetylenic structure to oxygen, addition of an antioxidant, optionally together with compounds enhancing the antioxidant effect, is particularly preferable. Suitable antioxidants and substances enhancing the antioxidative effect include natural tocopherols and their derivates, tocotrienols, flavonoids, ascorbic acid and salts thereof, alpha-hydroxy acids (for example citric acid, lactic acid, malic acid, tartaric acid) and Na-, K- and Ca-salts thereof, ingredients isolated from plants, extracts or fractions thereof, for example, from tea, green tea, algae, grape seeds, wheat germs, rosemary, oregano, flavonoids, quercetin, phenolic benzyl amines. Furthermore, propyl gallate, octyl gallate, dodecyl gallate, butyl hydroxy anisole (BHA), butyl hydroxy toluene (BHT), lecithines, monoand diglycerides of edible fatty acids esterified with citric acid, orthophosphates and Na-, K- and Ca-salts of monophosphoric acid and ascorbyl palmitate are suitable as antioxidants.

### (Solid Preparations)

Solid preparations in accordance with the present invention comprise one or more of the acetylenic fatty acid compounds in combination with a solid carrier and, optionally, further flavor-active and/or auxiliary ingredients.

Examples for acceptable solid carriers include inorganic carriers such as silicon dioxide (silicic acid, silica gel), carbohydrates and/or carbohydrate polymers (polysaccharides), cyclodextrins, starches, degraded starches (starch hydrolyzates, preferably maltodextrins and dextrins), chemically or physically modified starches, modified celluloses, gum arabic, Ghatti-gum, traganth, karaya, carrageenan, guar gum, locust bean gum, alginates, pectin, inulin and xanthan gum. Particularly preferred carrier substances are silicon dioxide, gum arabic and maltodextrins, wherein maltodextrins with DE (dextrose equivalent) values in the range of 5 to 20 are preferred. It is irrelevant, which plant is originally used for preparing the starch hydrolyzates from starch. Corn-based starches and starches of tapioca, rice, wheat or potatoes are suitable and readily available. The carrier substances can also act as a flow adjuvant, for example for silicon dioxide. The flavoring composition may comprise only one type of carrier, or two or more carriers in combination.

Preferably, the content of the solid carrier substances is 70% or higher, more preferably 85% or higher, even more preferably 90% or higher, based on the dry weight of the composition. The upper limit is 100% less the addition level of the one or more acetylenic fatty acid compounds. The ratio of the one or more acetylenic fatty acid compounds to the solid carrier preferably is in the range of 1:10 to 1:100,000, preferably in the range of 1:50 to 1:20,000, especially preferably in the range of 1:100 to 1:5,000, based on the dry weight of the composition.
The solid formulations can be prepared by mechanically mixing or granulating one or more types of solid carrier particles, one or more acetylenic fatty acid compounds and, optionally, the further flavor-active or auxiliary ingredients. Alternatively, the formulations can also be prepared dispersing or dissolving the carrier and the other ingredients in a suitable solvent, followed by spray-drying or freeze-drying. For the present invention, spray-dried compositions are preferable. Suitable spray-drying procedures are described in the literature. In this respect, reference is made to U.S. Pat. No. 3,159,585, U.S. Pat. No. 3,971,852, U.S. Pat. No. 4,532,145 and U.S. Pat. No. 5,124,162.

Preferably, the weight average particle size of the solid composition is in the range of 30 to 300*µ*m. The residual moisture content is preferably 5 wt.% or less.

### (Liquid Preparations)

Liquid preparations in accordance with the present invention comprise one or more acetylenic fatty acid compounds in combination with a liquid carrier and, optionally, further flavor-active and/or auxiliary ingredients.

Examples for liquid carriers include solvents such as water, ethanol or ethanol/water mixtures, polyhydric alcohols or non-toxic ethers, as well as edible oils. Suitable edible oils include vegetable oils such as borage oil, thistle oil, peanut oil, hazelnut oil, coconut oil, pumpkin seed oil, linseed oil, corn oil, macadamia nut oil, almond oil, olive oil, palm kernel oil, pecan oil, pistachio oil, rapeseed oil, rice germ oil, sesame oil, soybean oil, sunflower oil, walnut oil or wheat germ oil, or fractions available from them. Liquid neutral esters based on medium chain fatty acids and glycerin, such as Miglyols (for example Miglyol 810, Miglyol 812), can also be used. Sunflower oil, palm kernel oil and rapeseed oil are preferred. Furthermore, fractionated coconut oils, which mainly contain fatty acid residues having 6 to 8 C-atoms, are preferably used. These oils distinguish themselves by their taste neutrality and their good oxidation stability. A combination of multiple liquid carriers may be used, e.g., in the form of a mixed hydrophilic solvent, a mixed oil phase or an O/W or W/O emulsion.

According to a preferred embodiment, the composition is provided in the form of a W/O emulsion. Preferably, the W/O emulsion includes the following components:
- 5-30 wt.%, preferably 8-25 wt.% of water;
- 50-90 wt.%, preferably 60-80 wt.% of an oil phase, preferably comprising one or more of the edible oils as described above; and
- 0.1 to 5 wt.% of an consumable W/O emulsifier,
wherein the weight percentages are based on the total weight of the composition.

The content of the one or more acetylenic fatty acid compounds usually is less than 1 wt.%, preferably 0.01 to 0.1 wt.%. One or more of the above-described additional flavor-active and/or auxiliary components may be added as desired. Preferably, the auxiliary components include at least one antioxidant, preferably an antioxidant with good solubility in the oil component, such as tocopherol.

The consumable W/O emulsifier is preferably selected from the group consisting of lecithin (E 322), mono- and diglycerides of edible fatty acids (E 471), acetic acid monoglycerides (E 472a), lactic acid monoglycerides (E 472b), citric acid monoglycerides (E 472c), tartaric acid monoglycerides (E 472d), diacetyl tartaric acid monoglycerides (E 472e) or sorbitan monostearate (E 491).

### Products comprising the acetylenic fatty acid compounds or the flavoring composition

### (General)

According to the present invention, the acetylenic fatty acid compounds or the flavoring composition can be incorporated into a variety of consumable products, in particular foodstuffs, seasonings or beverages, in order to provide or enhance umami and/or kokumi flavor. Apart from edible products, incorporation into other types of flavored products such as an oral care product or chewing gum, which are intended for introduction into the oral cavity and removal after use (in the following also referred to as "non-food product"), is possible as well.

In view of their high activity, the compounds and compositions of the present invention can supplement and enhance the flavor of foodstuffs with savory and umami taste by increasing the mouthfulness and providing a kokumi effect. Thus, it is possible to provide hearty and savory foodstuffs with reduced content of monosodium glutamate (MSG). Accordingly, in a preferred embodiment, the compounds and compositions of the invention can be used for products for which a reduction of the monosodium glutamate (MSG) content is desired. In this context, a product with reduced MSG content refers to a product according to the invention containing considerably less monosodium glutamate than a conventional product, or a product which only contains intrinsic MSG but no externally added MSG.

### (Foodstuff)

The consumable products may include any type of foodstuff for which an umami and/or kokumi flavor is desired, and may be categorized in "ready-to-consume" products (i.e. foodstuffs ready for consumption) and "semi-finished" products such as sauces, seasonings, ketchup and the like, which are provided for addition to another foodstuff.

Respective examples for the ready-to-consume products and the semi-finished products include bread, cakes and pastries (e.g. bread, biscuits, cake, other bakery items), drinks (e.g. vegetable juices, vegetable preparations), instant drinks (e.g. instant vegetable drinks), meat products (e.g. ham, fresh sausage or raw sausage preparations, pickled or marinated fresh or salt meat products), seasoned or marinated fish products (e.g. surimi), eggs or egg products (dried egg, egg white, egg yolk), cereal products (e.g. pre-cooked finished rice products, rice flour products, millet and sorghum products, raw and pre-cooked noodles and pasta products), milk products (e.g. cream cheese, soft cheese, hard cheese, milk drinks, whey, butter, partially or wholly hydrolyzed milk protein-containing products), products made of soya protein or other soybean fractions (e.g. soya milk and products produced therefrom, soya lecithin-containing preparations, fermented products such as tofu or tempe or products produced therefrom, soya sauces), fish sauces such as for example anchovy sauces, oyster sauces, vegetable preparations (e.g. ketchup, sauces, dried vegetables, frozen vegetables, pre-cooked vegetables, pickled vegetables, vegetable concentrates or pastes or boiled down vegetables), potato preparations, snacks (e.g. baked or fried potato crisps or potato dough products, bread dough products, extrudates based on maize, rice or peanut), products based on fat and oil or emulsions thereof (e.g. mayonnaise, spread, remoulade, dressings, spice preparations), other ready-to-eat meals and soups (e.g. dried soups, instant soups, pre-cooked soups), stock cubes, sauces (instant sauces, dried sauces, ready-made sauces), spices or spice preparations (e.g. mustard preparations, horseradish preparations), condiments, seasonings, seasoning mixtures and in particular seasonings which are used for example in the snacks sector.

A ready-to-consume product according to the present invention includes the one or more acetylenic fatty acid compounds in a total quantity of usually 0.1 ppm to 1000 ppm, preferably 1 ppm to 500 ppm, even more preferably 10 ppm to 100 ppm, based on the total weight. For a semi-finished product, the content is usually 0.1 ppm to 100,000 ppm, preferably 10 ppm to 5,000 ppm, more preferably 50 ppm to 1,200 ppm, based on the total weight.

### (Non-Food products)

In the present description, the expression "non-food product" refers to a product which is intended for introduction into the oral cavity and removal after use. The composition and the compounds of the present invention can also be used for flavoring such non-food products. As specific examples, oral care products and chewing gum can be mentioned.

Examples for oral care products include, in particular, toothpaste, tooth cream, tooth gel, tooth powder, tooth cleaning liquid, tooth cleaning foam, mouthwash, tooth cream and mouthwash as a 2-in-1 product.

Chewing gum generally comprises a chewing gum base, i.e. a chewing mass which becomes plastic when chewed, various types of sugar, sugar substitutes, other sweetly tasting substances, sugar alcohols (especially sorbitol, xylitol, mannitol), cooling active substances, taste modifiers for unpleasant taste impressions, other taste-modifying substances (for example inositol phosphate, nucleotides such as guanosine monophosphate, adenosine monophosphate or other substances such as monosodium glutamate (MSG) or 2-phenoxypropionic acid), humectants, thickeners, emulsifiers, stabilizers, odor modifiers and flavorings (for example eucalyptus menthol, cherry, strawberry, grapefruit, vanilla, banana, citrus, peach, blackcurrant, tropical fruits, ginger, coffee, cinnamon, combinations (of the mentioned flavorings) with mint flavorings as well as spearmint and peppermint alone). The combination of flavorings with other substances, which have cooling, warming and/or mouthwatering properties, is also especially interesting.

The compounds of the present invention are also useful for modifying the taste of a chewing gum preparation, either as a partial replacement for MSG in a conventional chewing gum recipe, or as a flavoring additive for providing a kokumi- or mouthwatering effect.

In case the non-food product is provided in a form ready for use, the concentration of the one or more acetylenic fatty acid compounds is usually 0.1 ppm to 1000 ppm, preferably 1 ppm to 500 ppm, even more preferably 10 ppm to 100 ppm, based on the total weight. If the product is intended to be diluted, e.g., with water, the concentration may be higher and can be in the range of usually 0.1 ppm to 100,000 ppm, preferably 10 ppm to 5,000 ppm, more preferably 50 ppm to 1,200 ppm, based on the total weight of the undiluted product.

### Examples

The present invention will now be described in greater detail by means of the following non-limiting Examples.

### Flavor Evaluation

Firstly, the flavor evaluation procedure used for determining the kokumi-effects of the compounds of the present invention will be described.

### (Recombinant chanterelle flavor)

An artificial chanterelle flavor recombinant was used as a reference flavor for determining the flavor-enhancing effect of the compounds to be tested. The recombinant was prepared by combining the ingredients listed in the following Table 1. The pH value was adjusted to 5.8 with trace amounts of formic acid:

**Table 1:**

| Substance | Supplier | mg/L |
|---|---|---|
| Potassium-L-Glutamate * H2O | Fluka | 312.89 |
| Succinic acid | Fluka | 104.33 |
| IMP*8 H2O | Sigma-Aldrich | 206.48 |
| AMP*H2O | Sigma-Aldrich | 165.27 |
| UMP | Sigma-Aldrich | 43.44 |
| GMP disodium salt*H2O | Sigma-Aldrich | 139.87 |
| Magnesium L-lactate*H2O | Fluka | 236.56 |
| L-malic acid | Fluka | 1842.26 |
| Calciumcitrate*4 H2O | Sigma-Aldrich | 335.31 |
| Potassium hydroxide | Sigma-Aldrich | 4991.12 |
| Potassium chloride | Sigma-Aldrich | 22.85 |
| Potassium dihydrogenphosphate | Sigma-Aldrich | 1658.80 |
| D-Glucose | Sigma-Aldrich | 620.04 |
| D-Mannitol | Sigma-Aldrich | 3721.84 |
| D-Trehalose* 2H2O | Sigma-Aldrich | 12648.28 |

The ingredients and their relative amounts were determined based on the respective analytical results of the composition of a methanol/water extract of raw chanterelles. The concentrations in Table 1 correspond to the 1.25-fold of the natural concentration, wherein the natural concentration refers to the measured amount of the compounds over the total water content of the raw chanterelles.

It was confirmed that the taste profile of the thus prepared recombinant is close to the taste profile of the water-soluble fraction of the methanol/water extract of raw chanterelles described below.

### (Panel for sensory studies)

Seventeen trained assessors (ten women and seven men, ages 23-30) were recruited from the Chair of Food Chemistry and Molecular Sensory Science (TUM). The sensory sessions were performed at 22 °C in air-conditioned sensory booths. To prevent cross-modal interactions with odorants, the panelists used nose-clips. Furthermore the light in the sensory booths was adjusted to yellow in order to eliminate optical differences between the samples.

### (Taste profile analysis)

The taste descriptors umami, bitter, sour, sweet, salty, astringent, pungent and kokumi/mouthfulness were chosen for sensory evaluation of the mushroom extracts. Therefore the lyophilized sample was dissolved in 1.25-fold "natural" concentration (referred to the natural water content of the mushrooms) in bottled water and presented to the panel. All profiles were recorded and analyzed using the Fizz sensory software (version 2.46A) with a touchscreen. Intensities were rated on a scale from 0 (not perceivable) to 5 (strongly perceivable) and the evaluation results of all panelists were averaged.

### (Comparative taste dilution analysis)

The lyophilized samples were dissolved in 3-fold "natural" concentration ratios in the above-described chanterelle flavor recombinant and sequentially diluted 1:2 with this recombinant. These dilutions were presented to the sensory panel in order of increasing concentration. Each dilution was evaluated for the basic taste modalities as well as for mouthfulness, complexity and kokumi-taste impression by means of a duo-trio-test with the recombinant as the blank. The dilution at which a difference between the sample and the blank could just be detected was averaged and is expressed as the comparative taste dilution factor.

### (Intrinsic taste recognition of the purified compounds)

The human recognition thresholds for the intrinsic taste of the purified compounds were determined by means of three-alternative forced choice tests in 1% ethanol. Serial 1:2 dilutions of the sample were presented in order of increasing concentrations to the panelists using the sip-and-spit-method. The geometric mean of the last and the next-to-last concentrations were calculated and taken as the individual recognition threshold. The threshold values evaluated in two different sessions were averaged. Most of the compounds exhibit a bitter or astringent intrinsic taste at high concentrations.

### (Taste recognition thresholds for kokumi/mouthfulness enhancement)

The taste threshold concentrations of the purified compounds were determined in the above-described chanterelle flavor recombinant using duo-trio-tests. The pH value of the individual samples and blanks was adjusted to 5.8 by adding trace amounts of formic acid. The samples were presented in serial 1:2 dilutions in order of increasing concentrations to the trained panel and the panelists were asked to mark the sample differing from the recombinant which was used as constant reference (one sample was identical to the reference, one sample was different). The threshold value of the sensory panel was approximated by averaging the threshold values of the individual panelists in two independent sessions.

### Isolation of the compounds from chanterelles

### (Overview)

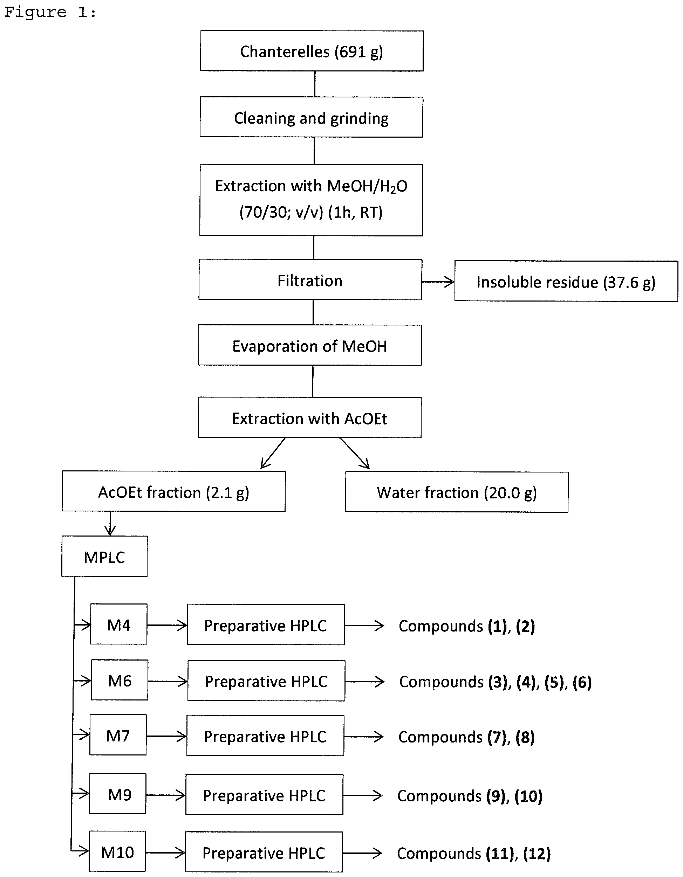

The general workflow for isolating the compounds of formulae **(1)** to **(12)** from chanterelles is illustrated in Figure 1, and involves the sequence of methanol/water extraction, ethyl acetate (AcOEt) extraction, MPLC fractionation of the obtained extract, and separation of the obtained fractions by preparative HPLC.

### (Methanol/Water extract)

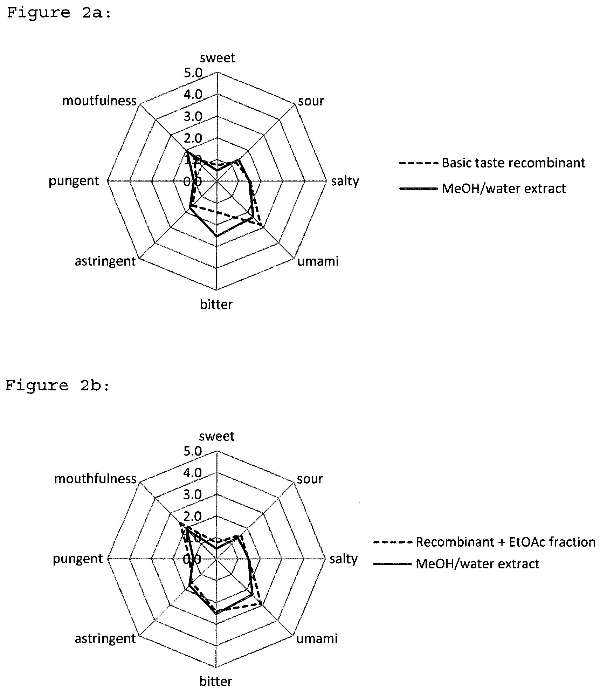

Raw mushrooms were frozen in liquid nitrogen, crushed with a grinding mill and then extracted with aqueous methanol (70% v/v) at room temperature for 1 h. After filtration, the solution was freed from methanol under reduced pressure, yielding an aqueous extract solution of the methanol/water fraction. The obtained extract was lyophilized, adjusted to 1.25-fold natural concentration and subjected to sensory evaluation. The results are shown in Figure 2.

Figure 2a shows the taste profile of the methanol/water extract in comparison to the above-described recombinant flavor. As apparent, the recombinant flavor lacks mouthfulness (kokumi) and bitterness. The higher perception of umami taste for recombinant flavor is most likely due to the reduced bitterness.

### (Ethyl acetate extraction)

The aqueous extract solution was extracted with ethyl acetate three times, and the combined ethyl acetate layers were separated from the solvent in a vacuum to yield the ethyl acetate fraction. The residual aqueous layer was lyophilized to give the water fraction.

The ethyl acetate fraction and the water fraction were subjected to sensory analysis. It was found that the water fraction maintained the umami flavor in accordance with the original methanol/water extract, but lacks bitterness and "mouthfulness" (kokumi flavor). The perceived umami flavor of the water fraction was even slightly higher than for the original methanol/water extract, supposedly a result of the reduced masking effect of the bitter components. The results are shown in Figure 2a.

The ethyl acetate fraction, on the other hand, mainly provided a bitter taste, while kokumi could not be evaluated. This indicates that the main contributors to the umami flavor are water-soluble and thus found in the water fraction, while the ethyl acetate fraction includes components of bitter taste and/or kokumi effect.

For reference, the recombinant and the ethyl acetate fraction were combined and subjected to sensory analysis. It was found that the addition of the ethyl acetate fraction restored the kokumi effect and the bitterness. The resulting taste profile of the recombinant flavor and the ethyl acetate fraction in combination was qualitatively similar to that of the original methanol/water extract, as shown in Figure 2b.

The further investigations concerned the identification of the relevant flavor compounds in the ethyl acetate fraction responsible for the kokumi- and bitterness-conferring effects.

### (MPLC of the ethyl acetate fraction)

The lyophilized ethyl acetate fraction was dissolved in 50% aqueous methanol to a final concentration of 0.1 mg/mL, membrane-filtered (0.45 *µ*m) and separated by MPLC on a RP-18 cartridge (50 mm x 150 mm). Analysis was performed at a flow rate of 40 mL/min using a solvent mixture of 0.1% formic acid (eluent A) and methanol (eluent B) and the following gradient:

**Table 2:**

| time [min] | solvent B [%] |
|---|---|
| 0 | 30 |
| 3 | 30 |
| 6 | 65 |
| 13 | 65 |
| 16 | 75 |
| 21 | 75 |
| 26 | 85 |
| 30 | 85 |
| 40 | 100 |
| 50 | 100 |
| 55 | 30 |
| 60 | 30 |

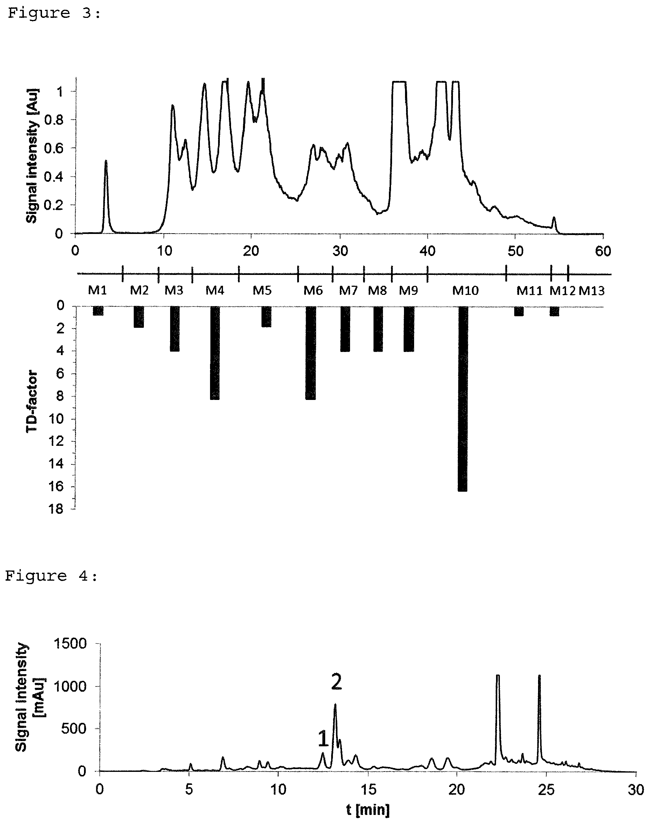

The column effluent was separated into 13 subfractions (M1-M13) according to the ELSD-signal, as shown in Figure 3 (upper panel). The subfractions were freed from the solvent and freeze-dried.

The MPLC subfractions were subjected to sensory evaluation by comparative taste dilution analysis and the modulating effect was evaluated. The results are shown in Figure 3 (lower panel). Subfractions M3-M10 were found to have a taste-modulating effect, which was more pronounced (up to a dilution factor of 8) in subfractions M4 and M6 and dominant in subfraction M10.

**HPLC of the subfractions:** In order to identify the active compounds providing the modulating effect, the subfractions M4, M6, M7, M9 and M10 were further investigated, and the active compounds were isolated by preparative HPLC.

For this purpose, the lyophilized MPLC-subfractions were dissolved in 45% aqueous methanol (M4, M6, M7) or 70% aqueous methanol (M9, M10), membrane-filtered (0.45 *µ*m) and separated. For fractions M4, M7, M9 and M10, the conditions were as follows:

| | |
|---|---|
| Column: | Nucleodur C18 Pyramid, 250 x 21.0 mm (Macherey-Nagel, Düren, Germany) |
| Flow: | 20.0 mL/min |
| Solvents: | A: 0.1% formic acid in water |
| | B: acetonitrile |

For fraction M6, the following conditions were used:

| | |
|---|---|
| Column: | Phenyl-Hexyl, 250 x 21.2 mm (Phenomenex, Aschaffenburg, Germany) |
| Flow: | 17.0 mL/min |
| Gradient: | A: 0.1% formic acid in water |
| | B: acetonitrile |

Monitoring the UV-signal at 240 nm, a number of HPLC-subfractions was collected, separated from the solvent and freeze-dried. The respective gradients for each MPLC fraction are given in Table 3 below:

**Table 3**

| M4 | | M6 | | M7 | | M9 | | M10 | |
|---|---|---|---|---|---|---|---|---|---|
| time [min] | solvent B [%] | time [min] | solvent B [%] | time [min] | solvent B [%] | time [min] | solvent B [%] | time [min] | solvent B [%] |
| 3 | 30 | 2 | 40 | 2 | 40 | 2 | 70 | 2 | 70 |
| 7 | 35 | 4 | 65 | 4 | 45 | 7 | 75 | 4 | 75 |
| 17 | 35 | 5 | 65 | 6 | 55 | 9 | 80 | 6 | 80 |
| 22 | 60 | 7 | 70 | 8 | 65 | 11 | 80 | 8 | 80 |
| 27 | 100 | 10 | 70 | 14 | 75 | 14 | 90 | 10 | 85 |
| 30 | 100 | 12 | 71 | 20 | 75 | 16 | 90 | 11 | 85 |
| 33 | 30 | 14 | 71 | 30 | 100 | 18 | 100 | 14 | 100 |
| 37 | 30 | 16 | 72 | 31 | 100 | 22 | 100 | 22 | 100 |
| | | 18 | 72 | 34 | 40 | 25 | 70 | 24 | 70 |
| | | 20 | 75 | 37 | 40 | 28 | 70 | 27 | 70 |
| | | 22 | 75 | | | | | | |
| | | 25 | 40 | | | | | | |
| | | 30 | 40 | | | | | | |

The obtained HPLC-subfractions were further investigated by mass spectrometry and 1H and 13C-NMR spectroscopy. It was possible to identify and isolate the compounds as listed below.

For the 8^{th} and the 10^{th} HPLC-subfraction of MPLC-fraction M10 (in the following abbreviated as fraction M10H8 and M10H10), it was found that the resolution of the respective compounds **(11)** and **(12)** was insufficient. Thus, the subfractions M10H8 and M10H10 were subjected to a second HPLC run, using the gradients as shown in the following Table 4:

**Table 4:**

| M10H8 | | M10H10 | |
|---|---|---|---|
| time [min] | solvent B [%] | time [min] | solvent B [%] |
| 6 | 80 | 2 | 70 |
| 10 | 85 | 4 | 75 |
| 14 | 85 | 8 | 80 |
| 26 | 100 | 12 | 80 |
| 28 | 100 | 13 | 85 |
| 30 | 80 | 14 | 85 |
| 33 | 80 | 25 | 100 |
| | | 27 | 100 |
| | | 30 | 70 |
| | | 32 | 70 |

### (Identified Compounds)

### In MPLC-fraction M4:

**(1)** (9Z,15E)-14,17,18-trihydroxy-9,15-octadecadien-12-ynoic acid in the 7^{th} HPLC-subfraction of MPLC-subfraction M4 (in the following abbreviated as subfraction M4H7); and
**(2)** (9Z,11Z)-14,17,18-trihydroxy-9,11-octadecadienoic acid (in subfraction M4H8).

### In MPLC-fraction M6:

**(3)** (10E,14Z)-9-hydroxy-10,14-octadecadien-12-ynoic acid (in subfraction M6H8);
**(4)** (9Z,15E)-14-oxo-9,15-octadecadien-12-ynoic acid (in subfraction M6H10);
**(5)** (10E,14Z)-9-oxo-10,14-octadecadien-12-ynoic acid (in subfraction M6H11); and
**(6)** (9Z,15E)-17(18)-epoxy-14-oxo-9,15-octadecadien-12-ynoic acid methyl ester (in subfraction M6H12).

### In MPLC-fraction M7:

**(7)** (10E,14Z)-12-hydroxy-10,14-octadecadienoic acid (in subfraction M7H5); and
**(8)** (9Z,15E)-14-oxo-9,15-octadecadien-12-ynoic acid methyl ester (in subfraction M7H11)

### In MPLC-fraction M9:

**(9)** (10E,14Z)-9-hydroperoxy-10,14-octadecadien-12-ynoic acid (in subfraction M9H4); and
**(10)** 14,15-dehydrocrepenyic acid (in subfraction M9H6).

### In MPLC-fraction M10:

**(11)** 14,15-dehydocrepenyic acid methyl ester (in subfraction M10H8, 4^{th} subfraction of the second HPLC run, in the following abbreviated as M10H8.4); and
**(12)** 14,15-dehydrocrepenyic acid ethyl ester (in subfraction M10H10.4.).

### (Kokumi-enhancing effect)

For the obtained compounds, the threshold for the intrinsic taste (in 1% ethanol/water) and the kokumi-enhancing effect (vis-à-vis the recombinant chanterelle flavor) were determined.

Furthermore, ximenynic acid was purchased from a commercial source and subjected to the above-described evaluation procedure with respect to the kokumi-enhancing effect (again vis-à-vis the recombinant chanterelle flavor).

The results are shown in Table 5 below:

**Table 5**

| No. | Substance | Kokumi threshold [µmol/l] | Intrinsic taste threshold [µmol/l] |
|---|---|---|---|
| **1** | (9*Z*,15*E*)-14,17,18-trihydroxy-9,15-octadecadien-12-ynoic acid | 59 | >1mM [bitter] |
| **2** | (9*Z*,11*Z*)-14,17,18-trihydroxy-9,11-octadecadienoic acid | not kokumi! | 331 [bitter] |
| **3** | (10*E*,14*Z*)-9-hydroxy-10,14-octadecadien-12-ynoic acid | 69 | 320 [astringent] |
| **4** | (9*Z*,15*E*)-14-oxo-9,15-octadecadien-12-ynoic acid | 19 | - |
| **5** | (10*E*,14*Z*)-9-oxo-10,14-octadecadien-12-ynoic acid | 79 | - |
| **7** | (10*E*,14*Z*)-12-hydroxy-10,14-octadecadienoic acid | not kokumi! | 297 [bitter] |
| **10** | 14,15-dehydrocrepenyic acid | 105 | 190 [bitter] |
| **11** | 14,15-dehydrocrepenyic acid methyl ester | 32 | 648 [astringent] |
| **12** | 14,15-dehydrocrepenyic acid ethyl ester | 59 | 512 [astringent] |
| | 11E-octadecen-9-ynoic acid (ximenynic acid) | 84 | 482 [bitter] |

As apparent, all compounds with triple bonds provide a kokumi-enhancing effect. A bitter or astringent intrinsic taste is only recognized at significantly higher threshold concentrations. This applies to both the compounds isolated from chanterelles, which are derived from dehydrocrepenyic acid and have the triple bond at position 12, and to ximenynic acid having the triple bond at position 9. Because of the low kokumi threshold values, which are below the thresholds for the bitter or astringent intrinsic taste, the compounds are useful for conferring or increasing the kokumi flavor without substantially increasing the bitterness or astringency.

In contrast, the isolated compounds **(2)** and **(7),** which do not possess the triple bond, did not exhibit a kokumi effect. This indicates that the presence of the triple bond is relevant.

## Claims

1. Use of an unsaturated linear C₁₆₋₂₄-monocarboxylic acid having at least one triple bond, or an ester or salt thereof, as a flavor.

2. The use according to claim 1, wherein the acid is a linear C₁₈-monocarboxylic acid having a triple bond at position 9 or 12.

3. The use according to claim 1 or 2, wherein the acid has at least one further double bond in addition to the triple bond.

4. The use according to claim 1, wherein the acid is of the following Formula (I):
Formula (I):
ROOC-(CH₂)₇-(A)-C≡C- (B) (I)
wherein R is hydrogen, a C₁₋₄ alkyl group or a cation which forms a salt with the ⁻OOC-moiety;
(A) represents a divalent C₃-segment constituting the carbon atoms 9 to 11 of the C₁₈-chain, having at least one of a double bond and an oxygen-containing substituent; and
(B) represents a monovalent C₅-segment constituting the carbon atoms 14 to 18 of the C₁₈-chain, which includes one or more of a double bond and an oxygen-containing substituent.

5. The use according to claim 4, wherein R is hydrogen, methyl or ethyl or an alkali metal.

6. The use according to claim 4 or 5, wherein (A) in the Formula (I) represents a group of the formula (A-1) or (A-2): 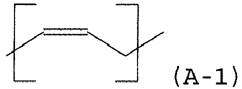 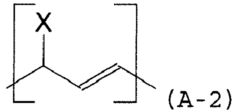 wherein X represents -OH, =O or -OOH.

7. The use according to any one of the claims 4 to 6, wherein (B) in the Formula (I) represents a group selected from the following Formulae (B-1) to (B-4): 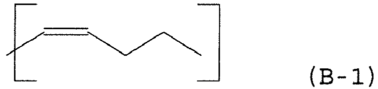 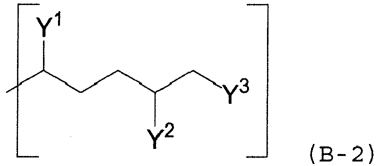 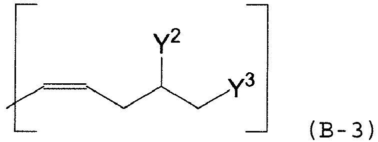 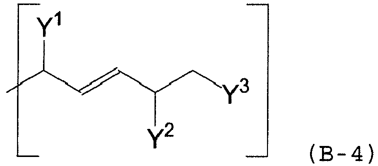 wherein Y¹ represents -OH, =O or -OOH; and
Y² and Y³ may be the same or different and represent -OH or =O, or Y² and Y³ together may form an epoxy group.

8. The use according to claim 4, wherein the acid of Formula (I) is selected from the group consisting of the following compounds (1), (3) to (6) and (8) to (12): 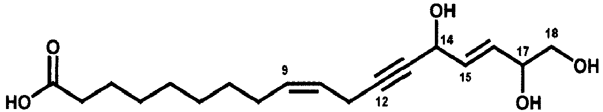
**(1)** (9Z,15E)-14,17,18-trihydroxy-9,15-octadecadien-12-ynoic acid 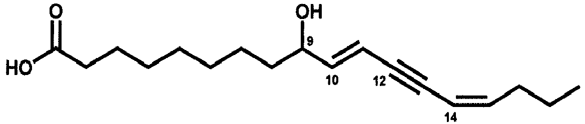
**(3)** (10E,14Z)-9-hydroxy-10,14-octadecadien-12-ynoic acid 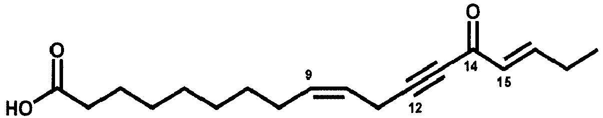
**(4)** (9Z,15E)-14-oxo-9,15-octadecadien-12-ynoic acid 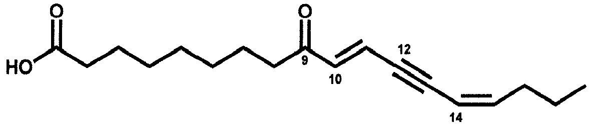
**(5)** (10E,14Z)-9-oxo-10,14-octadecadien-12-ynoic acid 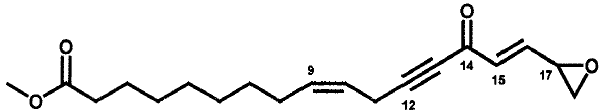
**(6)** (9Z,15E)-17(18)-epoxy-14-oxo-9,15-octadecadien-12-ynoic acid methyl ester 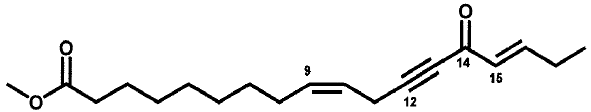
**(8)** (9Z,15E)-14-oxo-9,15-octadecadien-12-ynoic acid methyl ester 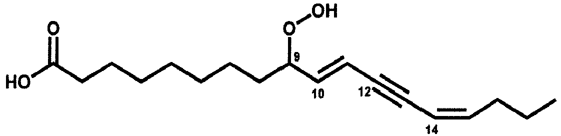
**(9)** (10E,14Z)-9-hydroperoxy-10,14-octadecadien-12-ynoic acid 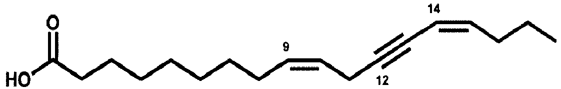
**(10)** 14,15-dehydrocrepenyic acid 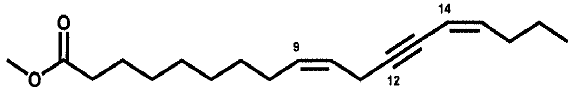
**(11)** 14,15-dehydocrepenyic acid methyl ester 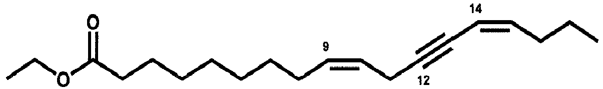
**(12)** 14,15-dehydrocrepenyic acid ethyl ester

9. The use according to any one of claims 1 to 8, as a flavor-conferring or taste-modifying agent for foodstuff or a flavored product intended for introduction into the oral cavity and removal after use.

10. The use according to claim 10, for imparting or enhancing kokumi taste.

11. A flavoring composition, comprising the unsaturated linear C₁₆₋₂₄-monocarboxylic acid or an ester or salt thereof, as defined in any one of the claims 1 to 8 as an active ingredient, together with an acceptable carrier.

12. The flavoring composition according to claim 11, wherein the carrier is a solid carrier, and the composition is solid preparation, preferably a spray-dried preparation.

13. The flavoring composition according to claim 11, wherein the carrier comprises an edible oil, and the composition is a liquid preparation, preferably a W/O emulsion.

14. A product selected from foodstuff and flavored products intended for introduction into the oral cavity and removal after use, comprising the unsaturated linear C₁₈-monocarboxylic acid or an ester or salt thereof, as defined in any one of the claims 1 to 8, as a flavoring additive in an amount effective for imparting or enhancing kokumi taste.

15. A compound selected from the group consisting of the following (1), (6), (8) and (9): 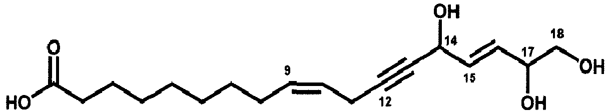
**(1)** (9Z,15E)-14,17,18-trihydroxy-9,15-octadecadien-12-ynoic acid 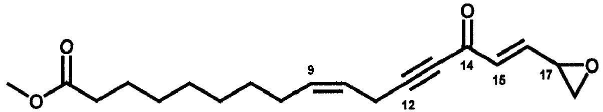
**(6)** (9Z,15E)-17(18)-epoxy-14-oxo-9,15-octadecadien-12-ynoic acid methyl ester 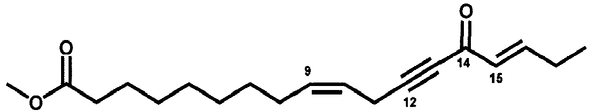
**(8)** (9Z,15E)-14-oxo-9,15-octadecadien-12-ynoic acid methyl ester 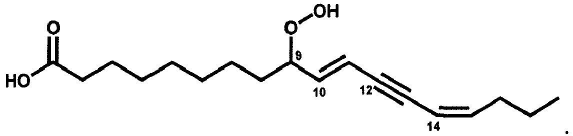
**(9)** (10E,14Z)-9-hydroperoxy-10,14-octadecadien-12-ynoic acid
